# EUROPÄISCHE PATENTSCHRIFT

(11) **EP 2 664 047 B1**
(45) Veröffentlichungstag und Bekanntmachung des Hinweises auf die Patenterteilung: **09.12.2015**
(21) Anmeldenummer: 11807885.6
(22) Anmeldetag: 14.12.2011
(51) Int. Cl.: H02J 3/18, H02P 9/00

(54) **ANSTEUERSCHALTUNG UND VERFAHREN FÜR UMRICHTER VON WINDENERGIEANLAGEN**
CONTROL CIRCUIT AND METHOD FOR CONVERTERS OF WIND TURBINES
CIRCUIT ET PROCÉDÉ DE COMMANDE POUR DES CONVERTISSEURS D'ÉOLIENNES

(30) Priorität: 14.01.2011 DE 102011008615
(43) Veröffentlichungstag der Anmeldung: 20.11.2013
(73) Patentinhaber: Senvion GmbH, 22297 Hamburg (DE)
(72) Erfinder: LETAS, Heinz-Hermann, 24796 Bovenau (DE)
(74) Vertreter: Glawe, Delfs, Moll
(86) Internationale Anmeldenummer: PCT/EP2011/072832
(87) Internationale Veröffentlichungsnummer: WO 2012/095233

(56) Entgegenhaltungen:
- DE-A1-102006 027 465
- DE-A1-102008 034 531
- DIANGUO XU ET AL: "Reactive power analysis and control of doubly fed induction generator wind farm", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-10, XP031541454, ISBN: 978-1-4244-4432-8

## Beschreibung

Die Erfindung betrifft ein Verfahren zum Steuern eines Umrichters einer Windenergieanlage, der am Rotor eines doppelt gespeisten Asynchrongenerators zur Einspeisung elektrischer Energie in ein elektrisches Netz angeschlossen ist, wobei der Umrichter einen generatorseitigen Wechselrichter, einen netzseitigen Wechselrichter und eine Steuerung umfasst, die Sollwerte für angeforderte Blindleistung an mindestens einen der Wechselrichter ausgibt. Die Erfindung betrifft ferner eine Vorrichtung mit einem entsprechend betriebenen Umrichter.

Moderne Windenergieanlagen sind in der Regel drehzahlvariabel ausgeführt und weisen einen Umrichter auf. Damit kann der Generator mit einer durch die Windstärke bestimmten Drehzahl umlaufen und dabei elektrische Energie mit entsprechend drehzahlabhängiger Frequenz erzeugen. Diese frequenzvariable elektrische Energie wird von dem Umrichter so umgeformt, dass sie zur Einspeisung in ein festfrequentes Versorgungsnetz (üblicherweise 50 Hz) geeignet ist. Derartige Umrichter umfassen üblicherweise zwei Wechselrichter, die über einen Zwischenkreis verbunden sind. Dabei ist einer der Wechselrichter mit dem Netz verbunden und ist im Betrieb mit der Netzfrequenz beaufschlagt (netzseitiger Wechselrichter), während der andere Wechselrichter (maschinenseitiger Wechselrichter) mit dem Generator verbunden ist, wobei die an ihm anliegende Frequenz unter anderem von der Drehzahl des Windrotors bestimmt ist. Derartige Umrichter können als Vollumrichter oder als Teilumrichter ausgeführt sein, letztere insbesondere in Kombination mit einer doppelt gespeisten Asynchronmaschine. Mit zunehmender Verbreitung von Windenergieanlagen und dem Anstieg der installierten Blindleistung wird aber nicht mehr nur ein einfaches Einspeisen von Wirkleistung in das elektrische Netz gefordert, sondern es ist ein Betrieb der Windenergieanlagen erwünscht, welcher zusätzliche Dienstleistungen für das Netz erbringt. Die sogenannten Systemdienstleistungen für das Netz umfassen insbesondere das Einspeisen von Blindleistung, bspw. zur Stützung des Netzes bei erniedrigter Spannung bzw. Netzfrequenz. (siehe Z.B. DE 10 2006 027 465 A1) Hierbei kann insbesondere bei den für Windenergieanlagen mit höherer Leistung häufig verwendeten doppelt gespeisten Asynchrongeneratoren das Problem entstehen, dass der zumeist nur für ein Drittel der elektrischen Gesamtleistung der Windenergieanlage ausgelegte Umrichter die zusätzlich zur Netzstützung notwendigen Ströme nicht mehr erreichen kann. Dies gilt insbesondere dann, wenn aufgrund von Unterspannung oder niedriger Netzfrequenz ungünstige Betriebsbedingungen herrschen, die zu ohnehin erhöhten Strömen führen. Außerdem können sich zusätzliche Komplikationen durch Zusatzanforderungen ergeben, wie bspw. das Verlangen nach einem schallarmen Betrieb und, häufig damit verknüpft, einen Betrieb im Bereich der Synchrondrehzahl.

Es ist bekannt, zur besseren Ausnutzung des Umrichters den Blindleistungsstrom für den netzseitigen Wechselrichter linear abhängig von der gesamten Blindleistungsvorgabe zu bestimmen. Damit wird die Ausnutzung des Umrichters in Bezug auf die Blindleistungsgewinnung zwar verbessert, jedoch geht damit die Gefahr einer Überlastung vor allem in kritischen Betriebssituationen nahe dem Synchronpunkt einher. Weiter ist vorgeschlagen worden, im Betrieb die Verteilung der Blindleistung zwischen den beiden Wechselrichtern des Umrichters dynamisch zu verändern. Dies soll in Abhängigkeit davon geschehen, ob bestimmte vordefinierte Bedingungen erfüllt sind, um dann denjenigen der Wechselrichter mit höherer Wirkleistungsbelastung von Blindleistung zu entlasten. Es hat sich gezeigt, dass das vorgeschlagene Konzept gewisse Schwierigkeiten bei der Abstimmung bereitet, und sich häufig nur auf einen Betrieb im Nennpunkt bei Nenndrehzahl, Nennleistung und bei Netznennfrequenz abstimmen lässt.

Der Erfindung liegt die Aufgabe zugrunde, die Blindleistungsbereitstellung zu verbessern, insbesondere die Ausnutzung des Umrichters zu verbessern.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Steuern eines Umrichters einer Windenergieanlage, der an einen Rotor eines doppelt gespeisten Asynchrongenerators zur Einspeisung elektrischer Energie an ein elektrisches Netz angeschlossen ist, wobei der Umrichter einen generatorseitigen Wechselrichter, einen netzseitigen Wechselrichter und eine Steuerung umfasst, die Sollwerte für angeforderte Blindleistung an mindestens einen der Wechselrichter ausgibt, ist gemäß der Erfindung vorgesehen ein Bestimmen eines Blindleistungssollsignals für den Anteil, den einer der Wechselrichter zur angeforderten Blindleistung beiträgt, ein Bestimmen eines Schlupfsignals aus Frequenz des Netzes und Drehzahl des Generators, ein Berechnen eines Verstärkungswerts in Abhängigkeit von dem Schlupfsignal, ein Modifizieren des Blindleistungssollsignals für diesen Wechselrichter mittels des Verstärkungswerts und ein gegenläufiges Ändern des Blindleistungssollsignals für den anderen der Wechselrichter.

Kern der Erfindung ist der Gedanke, die Bestimmung der von einem der Wechselrichter, vorzugsweise dem netzseitigen, zu liefernden Blindleistung einer vom Schlupf des Generators abhängigen Verstärkungsfunktion zu unterwerfen. Die schlupfabhängige Verstärkungsfunktion erzeugt eine Vergrößerung bzw. Verkleinerung des von diesem Wechselrichter erbrachten Anteils an der Sollblindleistung. Mittels der Vergrößerung bzw. Verkleinerung wird eine Modulation des Anteils erreicht, den dieser Wechselrichter zur geforderten Blindleistung liefert, und zwar in Abhängigkeit von dem Schlupfzustand der Windenergieanlage. So kann bspw. dank der Erfindung der Anteil des netzseitigen Wechselrichters bei keinem oder nur geringem Schlupf (also bei Betrieb im oder nahe am Synchronpunkt, d. h. im Synchronbereich) erhöht werden, um den beim Betrieb im Synchronbereich häufig an seiner Belastungsgrenze betriebenen maschinenseitigen Wechselrichter zu entlasten - umgekehrt braucht bei größerem Schlupf der netzseitige Wechselrichter nicht mehr einen so großen Anteil zu übernehmen, sondern kann einen kleineren Teil der Blindleistung beisteuern.

Die Erfindung hat erkannt, dass mit dieser schlupfabhängigen Vergrößerung/Verkleinerung die Verteilung der Blindleistung auf die beiden Wechselrichter über einen weiten Betriebsbereich hinweg optimiert werden kann und nicht nur, wie bei den aus dem Stand der Technik bekannten Lösungen, an einzelnen, diskreten vorbestimmten Betriebspunkten. Indem auf den Schlupf als Eingangsparameter abgestellt wird, erreicht die Erfindung, dass auch bei Abweichungen der Netzfrequenz von der Nennfrequenz die Verteilung der Blindleistung auf die beiden Wechselrichter entsprechend angepasst werden kann. Während es herkömmlicherweise bei einem Anstieg der Netzfrequenz wegen der damit einhergehenden Verkleinerung des Schlupfes zu einer problematischen höheren Strombelastung der Rotorwicklungen kommt, kann dank der erfindungsgemäß modifizierten Sollwertverkleinerung sogar ein insgesamt größerer Beitrag der Wechselrichter erzielt werden. Damit stellt die Erfindung auch bei dem herkömmlicherweise kritischen Betrieb im Bereich der Synchrondrehzahl eine hohe Robustheit gegenüber Abweichungen der Netzfrequenz bereit, und zwar über einen weiten Betriebsbereich. Die Nutzbarkeit der Windenergieanlage wird damit verbessert, insbesondere die Möglichkeit zum Betrieb mit lärmarmen und niedrigeren Drehzahlen bei gleichzeitig höherem Drehmoment, welche bisher mit einer zu hohen Belastung der Umrichter einhergingen.

Vorzugsweise wird der Verstärkungswert mittels einer Ersatzfunktion berechnet. In dieser Ersatzfunktion kann das Systemverhalten mathematisch abgebildet sein. Mit Vorteil wird hier ein stark vereinfachtes Ersatzmodell des elektrischen Systems der Windenergieanlage zugrundegelegt. Bewährt hat sich eine quadratische Ersatzfunktion.

Vorzugsweise erfolgt gegenüber dem anderen Wechselrichter eine gegenläufige Sollwertvorgabe, so dass sich gegenüber dem Netz keine Änderung ergibt.

Grundsätzlich ermöglicht die Erfindung eine geschlossene Darstellung der Ersatzfunktion zur Berechnung des Verstärkungswerts. Sie kann mehrgliedrig erfolgen, indem bei der Berechnung des Verstärkungswerts eine Grundfunktion verwendet wird, die vorzugsweise eine quadratische Funktion ist, und zusätzliche Korrekturterme gebildet sind. Bevorzugt ist aber das Abrufen der Werte aus einer Look-up-Tabelle (LUT). In der LUT kann eine Anzahl von Stützstellen definiert sein, die speziell auf die jeweiligen Windenergieanlagen und deren Komponenten abgestimmt sind. Es wird damit erreicht, dass durch entsprechende Wahl der Stützstellen Belastungsgrenzen der Komponenten berücksichtigt werden, insbesondere der Wechselrichter sowie die Strombelastbarkeit der Generator- und Transformatorwicklungen und die Strombelastbarkeit der Kabel. So kann vermieden werden, dass Drehmomente angefordert werden, die höher wären als das Nennmoment. Weiter kann der Eigenverbrauch der Windenergieanlage berücksichtigt werden, welcher je nach Schlupfbedingung (positiv oder negativ) die entsprechende Trafowicklung zusätzlich belastet (Schlupf positiv, untersynchroner Betrieb) oder entlastet (Schlupf negativ, übersynchroner Betrieb).

Mit der LUT kann derartigen individuellen Abweichungen auf besonders elegante Weise Rechnung getragen werden. Unabhängig davon, ob eine LUT oder ob eine Grundfunktion mit Korrekturtermen verwendet werden, sind die Wertpaare jeweils mit Vorteil so bestimmt, dass in einem Drehzahlbereich bis zum unteren Eckwert des Synchronbereichs der netzseitige Wechselrichter praktisch voll für die Blindleistungsbereitstellung genutzt wird, im Bereich vom unteren bis zum oberen Eckwert des Synchronbereichs der maschinenseitige Wechselrichter praktisch voll genutzt wird, und über dem oberen Eckwert des Synchronbereichs der Beitrag des maschinenseitigen Wechselrichters wiederum enger begrenzt wird.

Das Modifizieren des Sollwerts für die Blindleistung mittels des Verstärkungswerts erfolgt mit Vorteil durch Aufmodulieren. Dies kann praktisch besonders einfach durch ein Multiplizieren erfolgen.

Gemäß einer vorteilhaften Ausführungsart der Erfindung erfolgt die Blindleistungsberechnung strombasiert auf Grundlage einer Fixspannung, die vorzugsweise dem Spannungswert für die untere Grenze eines Spannungstoleranzbandes (üblicherweise 90% der Nennspannung bzw. -10% Toleranz gegenüber der Auslegungsspannung) entspricht. Dies ermöglicht eine einfache Berechnung mit Wirk- und Blindströmen anstelle der Wirk- bzw. Blindleistungen.

Die Verstärkungsfunktion kann mehrgliedrig sein. So kann ein Zusatzglied vorgesehen sein, welches keine Fixspannung, sondern eine variable Spannung (z. B. die Rotorspannung) und/oder weitere Parameter (zum Beispiel die Temperatur der Wechselrichter) berücksichtigt. Mehrgliedrig im Sinne dieser Erfindung erfasst auch die Verwendung mehrerer Variablen, z. B. für eine Kennlinienschar.

Die Erfindung bezieht sich ferner auf einen Umrichter bzw. eine Windenergieanlage mit einer zur Ausführung des obigen Verfahrens entsprechend ausgebildeten Steuerung. Zur näheren Erläuterung der Betriebsweise wird auf obige Beschreibung verwiesen.

Die Erfindung wird nachfolgend unter Bezugnahme auf die Zeichnung anhand eines vorteilhaften Ausführungsbeispiels näher erläutert. Es zeigen:
- Fig. 1:: eine schematische Gesamtansicht einer Windenergieanlage;
- Fig. 2a, b:: Leistungsflussdiagramme in originaler und vereinfachter Darstellung;
- Fig. 3:: eine schematische Ansicht des Generator/Umrichter-Systems der Windenergieanlage gemäß Fig. 1;
- Fig. 4:: ein Ausführungsbeispiel für eine erfindungsgemäß ausgebildete Steuerung für einen Umrichter;
- Fig. 5a - c:: Diagramme für eine idealisierte und korrigierte Funktion für die Verstärkungswerte;
- Fig. 6:: ein Blockdiagramm mit einer Verstärkungsfunktion;
- Fig. 7: ein Zusatzglied für die Verstärkungsfunktion gemäß Fig. 6;
- Fig. 8a, b:: Diagramme für Blindleistung und Drehmoment bei verschiedenen Betriebsbedingungen;
- Fig. 9:: ein Kennliniendiagramm mit einer idealisierten und einer stützstellenbasierten Verstärkungsfunktion; und
- Fig. 10:: ein Kennliniendiagramm zu einer Variante.

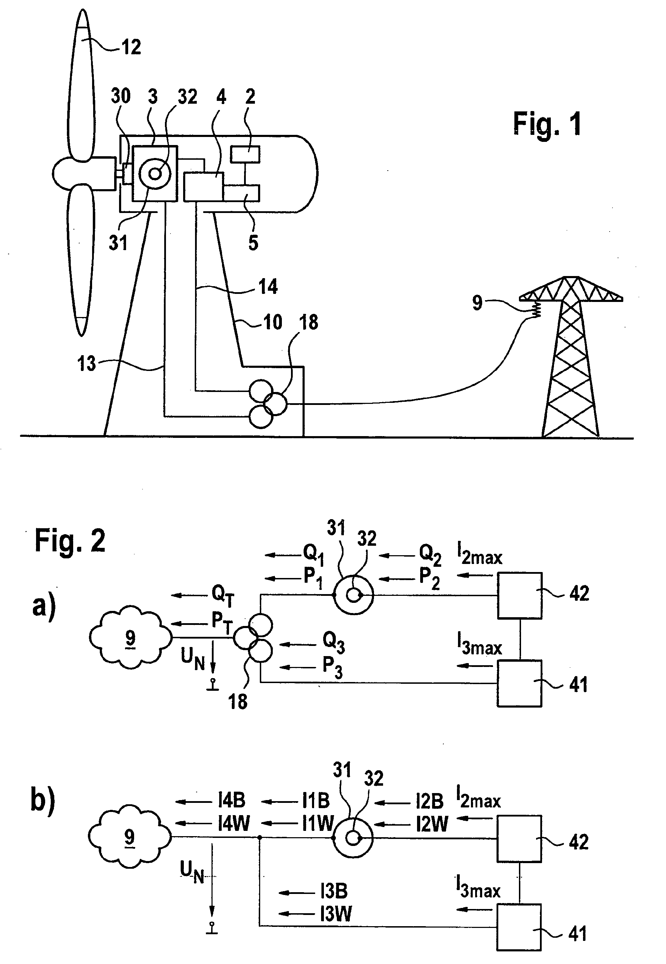

Der generelle Aufbau der Windenergieanlage gemäß einem Ausführungsbeispiel der Erfindung sei anhand von Fig. 1 kurz erläutert. Ein Windrotor 12 einer Windenergieanlage wird durch den Wind in Drehung versetzt. Der Windrotor 12 ist über ein Getriebe 30 mit einem Generator 3 verbunden und versetzt einen Rotor 32 des Generators 3 in Drehung. Ein Stator 31 des Generators 3 ist über Leitungskabel 13 im Turm 10 der Windenergieanlage und einen Transformator 18 an ein elektrisches Netz 9 angeschlossen. Der Rotor 32 des Generators 3 ist an einen Umrichter 4 angeschlossen, der wiederum ebenfalls über Leitungskabel 14 im Turm 10 an eine zweite Primärwicklung des Transformators 18 und darüber an das elektrische Netz 9 angeschlossen ist. Weiter vorgesehen ist eine Steuerung 5 für den Umrichter 4, die wiederum mit einer Betriebssteuerung 2 verbunden ist.

Der Transformator 18 ist in dem dargestellten Ausführungsbeispiel mit drei Wicklungen ausgeführt, also mit jeweils separaten Wicklungen für die Leitungen 13 und 14 vom Stator 31 bzw. Rotor 32. Ausführungen mit nur zwei oder einer anderen, höheren Anzahl von Wicklungen sind ebenfalls möglich.

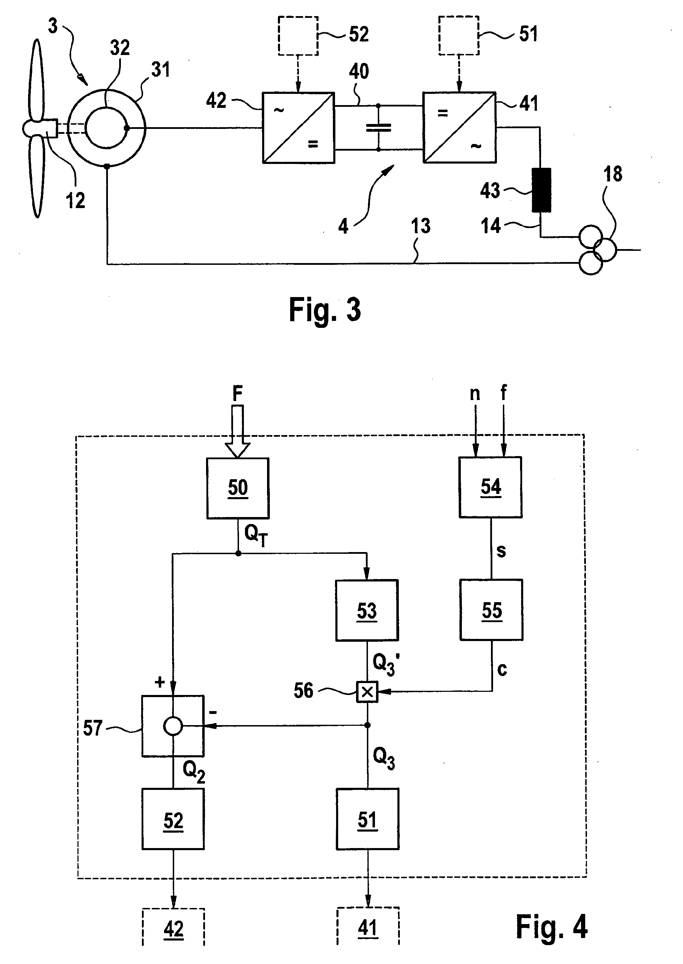

Das Zusammenwirken des Generators 3 und des Umrichters 4 ist näher in Fig. 3 dargestellt. Der Umrichter 4 umfasst einen generatorseitigen Wechselrichter 42 und einen netzseitigen Wechselrichter 41, die über einen Gleichspannungszwischenkreis 40 (alternativ kann auch ein Gleichstromzwischenkreis vorgesehen sein) verbunden sind. Der generatorseitige Umrichter 42 ist an den Rotor 32 angeschlossen. Der netzseitige Wechselrichter 41 ist über eine Drossel 43 an eine Leitung 14 zum Transformator 18 angeschlossen. Zur Steuerung des Umrichters 4 ist die Steuerung 5 vorgesehen, die über Wechselrichterregler 51, 52 (in Fig. 3 gestrichelt dargestellt) die den ihnen jeweils zugeordneten Wechselrichter 41, 42 ansteuern.

Die sich ergebenden Leistungsflüsse werden anhand von Fig. 2 für Wirk- und Blindleistung erläutert. In Fig. 2a ist die leistungsrelevante Topologie der Windenergieanlage vollständig dargestellt. Der Generator 3 erzeugt mit seinem Stator 31 eine Blindleistung Q1 und eine Wirkleistung P1 mit einer Spannung U1 und gibt diese an den Transformator 18 ab. Der Rotor 32 wird versorgt mit einer Wirkleistung P2 und einer Blindleistung Q2 vom maschinenseitigen Wechselrichter 42 bei einer Spannung U2. Weiter ist für den maschinenseitigen Wechselrichter 42 eine Stromgrenze in Höhe von I2max zu beachten. Der netzseitige Wechselrichter 41 speist die Leistung P3 und die Blindleistung Q3 bei einer Spannung von U3 in den Transformator 18 ein. Hierbei ist die Stromgrenze I3max zu beachten. Der Transformator 18 überträgt die Wirkleistung P_{T} und Q_{T} an das Netz 9 bei einer Spannung U_{N}.

Fig. 2b zeigt eine vereinfachte Darstellung, welche für die erfindungsgemäße Betrachtung zugrunde gelegt wird. Hier ist das vom Generator 3 und Umrichter 4 gebildete System umgerechnet auf das Spannungsniveau U_{N} des Netzes 9; der Transformator 18 fällt daher aus der Betrachtung. Weiter wird zur Vereinfachung angenommen, dass stets die im Toleranzband tiefste zulässige Spannung vorherrsche, also bspw. U_{N}=0,9xUsoll. Durch diese Festspannung können die Wirk- und Blindleistungen umgerechnet werden in entsprechende Wirk- und Blindströme, die durch die jeweiligen Indizes W und B kenntlich gemacht sind.

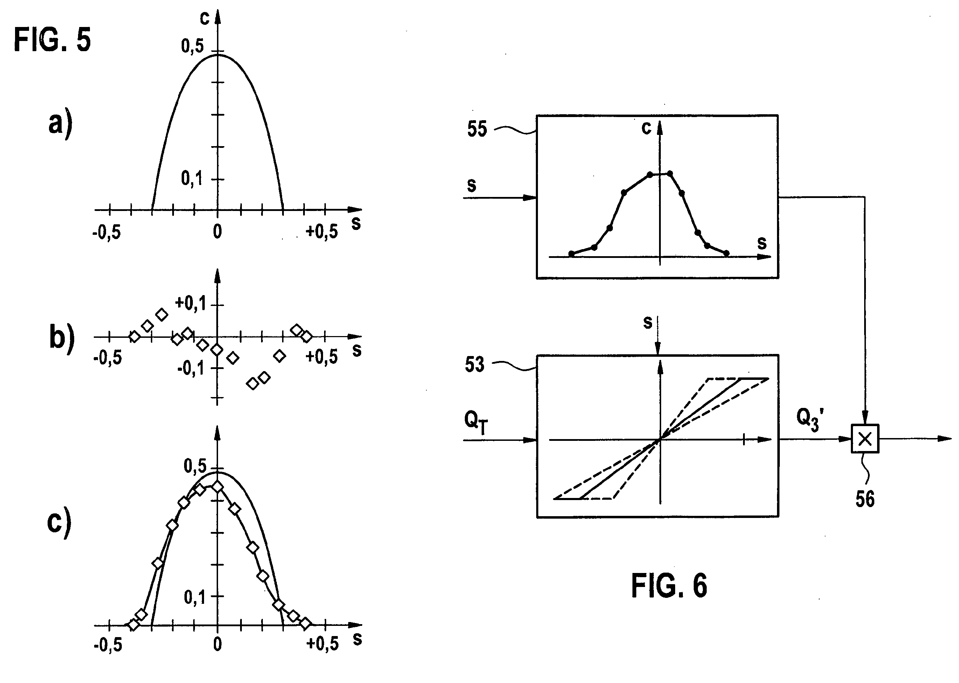

Die Steuerung 5 ist als Blockdiagramm in Fig. 4 dargestellt. Sie umfasst einen Regelkern 50, an den ein Steuervektor F mit Sollwertsignalen von der Betriebssteuerung 2 angelegt ist. Der Regelkern 50 bestimmt aus dem Steuervektor F ein Signal für einen Sollwert der bereitzustellenden Gesamtblindleistung. Dieses Signal Q_{T} wird von dem Regelkern 50 an einen Eingang eines Kennlinienglieds 53 angelegt. Das Kennlinienglied 53 enthält eine Kennlinie entsprechend einer linearen Begrenzungsfunktion, welche in an sich bekannter Weise abhängig von der angeforderten Gesamtblindleistung Q_{T} den vom netzseitigen Wechselrichter 41 zu liefernden Blindleistungsanteil Q₃' bestimmt und an seinem Ausgang bereitstellt. Dieses Signal wird zum Wechselrichterregler 51 für den netzseitigen Wechselrichter 41 geführt, aber erfindungsgemäß nicht direkt angelegt. Vielmehr bildet es das Rohsignal, das von einem Block für die erfindungsgemäße Berechnung des Verstärkungswerts in Abhängigkeit von einem Schlupfsignal weiterverarbeitet wird. An dem Verstärkungsblock 55 ist als Eingangssignal ein Schlupfwert s angelegt. Dieser ist bestimmt von einem vorgeschalteten Schlupfberechnungsblock 54, an dem als Eingangssignale Werte für die Netzfrequenz f und für die Drehzahl n des Generators 3 angelegt sind. Es sei angemerkt, dass der Schlupfberechnungsblock 54 nicht zwingend ein Teil der Steuerung 5 zu sein braucht, sondern genauso gut auch extern angeordnet sein kann, bspw. als Teil der Betriebssteuerung 2; in diesem Fall würde das Schlupfsignal s als Teil des Führungsvektors an die Steuerung 5 und damit an den Verstärkungsblock 55 angelegt sein. Der Verstärkungsblock 55 enthält ein Funktionsglied, welches eine durch Stützstellen bestimmte Kennlinie abbildet. Ein Beispiel hierfür ist in Fig. 6 dargestellt. In Abhängigkeit von dem Signal für den Schlupf als Eingangswert bestimmt der Verstärkungsblock 55 einen Verstärkungswert c. Dieser wird über ein Multiplikationsglied 56 auf das Ausgangssignal des Blocks 53 aufmoduliert, und das somit erhaltene modifizierte Signal als Sollwert Q3' für die vom netzseitigen Wechselrichter 41 bereitzustellende Blindleistung Q3 an dessen Wechselrichterregler 51 angelegt. Über eine Nachlaufeinheit 57, die in dem dargestellten Ausführungsbeispiel als Differenzglied ausgebildet ist, wird der verbleibende Restanteil an zu liefernder Blindleistung bestimmt, und als Sollsignal Q2 an den Wechselrichterregler 52 des maschinenseitigen Wechselrichters 42 angelegt. Die Steuerung kann auch als Kompakteinheit ausgeführt und in eine der Wechselrichtersteuerungen 51, 52 integriert sein, bspw. in den Wechselrichterregler 52. Dies ermöglicht eine Vereinfachung des Signalpfads, indem das Signal für die Gesamtblindleistung Q_{T} bspw. nur an den integrierten maschinenseitigen Wechselrichter 52 angelegt ist.

Unter Bezugnahme auf Fig. 6 wird nun die Wirkung der Verstärkungsfunktion erläutert. Der Sollwert für die Gesamtblindleistung Q_{T} ist an einen Eingang des Kennlinienblocks 53 angelegt. Dieser ermittelt anhand der dargestellten Begrenzerfunktion denjenigen Anteil, der durch den netzseitigen Wechselrichter 41 bereitgestellt werden soll. Mit den Bezeichnungen von Fig. 2 handelt es sich also um eine Roh-Bestimmung von Q3soll bzw. I3Bsoll. Allerdings wird dieser Wert nicht direkt an den Wechselrichter 51 angelegt, sondern zur Weiterverarbeitung mit einem Verstärkungswert aus dem Verstärkungsfunktionsblock 55 multipliziert. Es sei angemerkt, dass weitere Variablen berücksichtigt sein können, bspw. je nach Schlupf s eine Kennlinie aus einer Kennlinienschar (s. gestrichelte Darstellung in Fig. 6) ausgewählt sein kann.

Der Verstärkungsblock 55 enthält eine durch Stützstellen bestimmte Kennlinie, wobei die Bereiche zwischen den Stützstellen durch Splines linearisiert sind. Die Kennlinie ähnelt im Idealfall einer negativ quadratischen Funktion mit Maximum auf der Y-Achse. Eine solche Ersatzfunktion ist in Fig. 5a dargestellt. Zur Anpassung an die Strombelastbarkeit anderer Komponenten, zur Berücksichtigung anderer Impedanzen und insbesondere zur Berücksichtigung des Eigenverbrauchs der Windenergieanlage werden Korrekturterme gebildet, wie sie in Fig. 5b dargestellt sind. Damit ergibt sich die in Fig. 5c dargestellte unsymmetrische Verstärkungsfunktion, wobei zum Vergleich die idealisierte Ersatzfunktion dargestellt ist. In Abhängigkeit von dem durch den Block 54 bestimmten Schlupf wird der Verstärkungswert ermittelt, welcher auf die Sollwertvorgabe für den netzseitigen Wechselrichter 51 mittels des Blocks 56 aufmoduliert wird. Bei einem geringen Schlupf, bspw. beim Schlupf 0, erreicht der Verstärkungswert c den größten Wert (Vergrößerung) und der netzseitige Wechselrichter übernimmt einen großen Anteil an der Sollblindleistung. Hingegen wird bei einem größeren Schlupf bzw. bei einem Schlupf von -0,2 (Nennschlupf) ein kleinerer Verstärkungswert ermittelt (Verkleinerung), der durch den netzseitigen Wechselrichter nur in entsprechend geringerem Umfang zur Erzeugung von Blindleistung herangezogen wird.

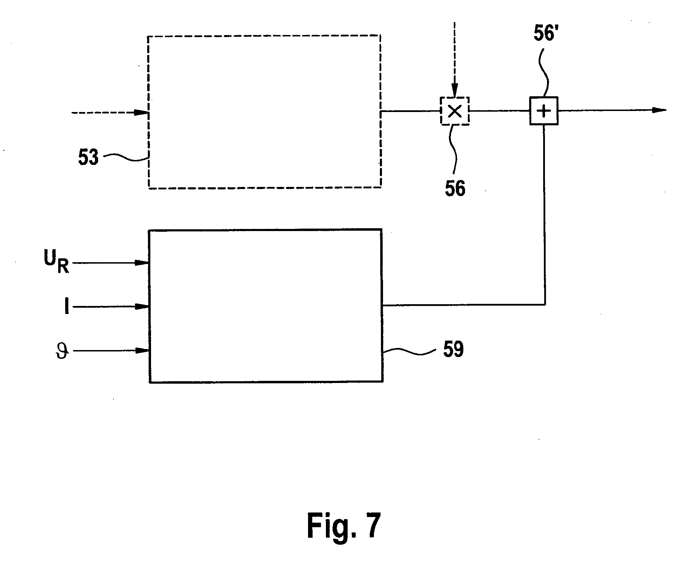

Ein Zusatzglied 59 für die Verstärkungsfunktion ist in Fig. 7 dargestellt. Es umfasst in dem dargestellten Ausführungsbeispiel Eingänge für die Spannung (bspw. Rotorspannung), eingespeisten Strom und Temperatur der Wechselrichter 41, 42. Sein Ausgangssignal ist wie bei dem Verstärkungsblock 55 aufmoduliert, und zwar entweder mit demselben Block 56 oder einem weiteren Block 56', in dem ggf. eine andere Funktion zum Aufmodulieren implementiert ist. Damit kann eine weitere Veränderung des Verstärkungswerts erreicht werden, bspw. eine Verschiebung zu höheren oder niedrigeren Schlupfwerten.

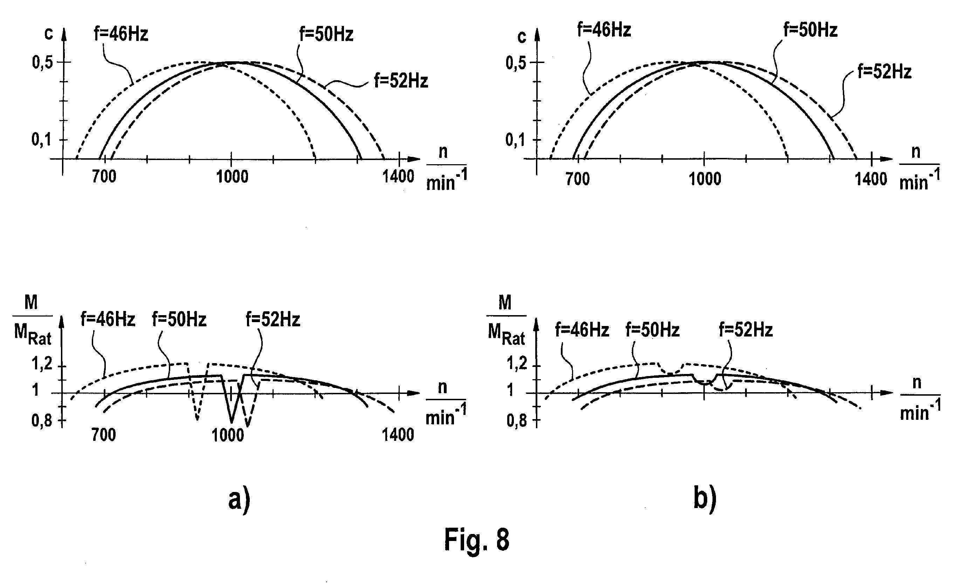

Zwei Anwendungsbeispiele sind in Fig. 8 dargestellt. In Fig. 8b oben sind die sich über die verschiedenen Drehzahlen je nach Netzfrequenz ergebenden Verstärkungswerte bei einer quadratischen Verstärkungsfunktion dargestellt. Es werden Werte bis zu 0,5 erreicht, was bedeutet, dass der netzseitige Wechselrichter 41 bis zur Hälfte der bereit zu stellenden Blindleistung übernimmt. Das bei dieser Verteilung zwischen dem netzseitigen und maschinenseitigen Wechselrichter 41, 42 mögliche Drehmoment, das noch ohne Überlastung aufgenommen werden kann, ist in Fig. 8b unten dargestellt. Man erkennt, dass sowohl bei erniedrigter (46 Hz), normaler (50 Hz) wie auch bei erhöhter (52 Hz) Netzfrequenz dank der erfindungsgemäßen Aufteilung der Blindströme zwischen den Wechselrichtern ein Drehmoment übertragen werden kann, welches größer ist als das Nennmoment. Entsprechendes ist in Fig. 8a dargestellt, allerdings mit einer zusätzlichen Einschränkung. Im realen Betrieb ist es so, dass der maschinenseitige Wechselrichter 42 bei einem Betrieb im oder nahe am Synchronpunkt nur eine geringere Strombelastbarkeit aufweist, da es wegen der geringen Grundschwingungsfrequenzen ansonsten zu einer Überhitzung der aktiven Elemente des Wechselrichters 42 käme. In diesem Bereich muss das Moment also reduziert sein. Dies erkennt man an den einschnittartigen Drehmomentverringerungen in Fig. 8a,

die jeweils um die durch die Netzfrequenz bestimmte Synchrondrehzahl (N=920⁻¹ für f=46 Hz, 100min⁻¹ bei f=50 Hz und 1040min⁻¹ bei f=52 Hz) liegen. Trotz dieser Einschränkung in Bezug auf den Betrieb des maschinenseitigen Wechselrichters gelingt es dank der Erfindung, das übertragbare Moment auch unter ungünstigen Betriebsbedingungen in der Nähe des Synchronpunkts oberhalb des Nennmoments zu halten.

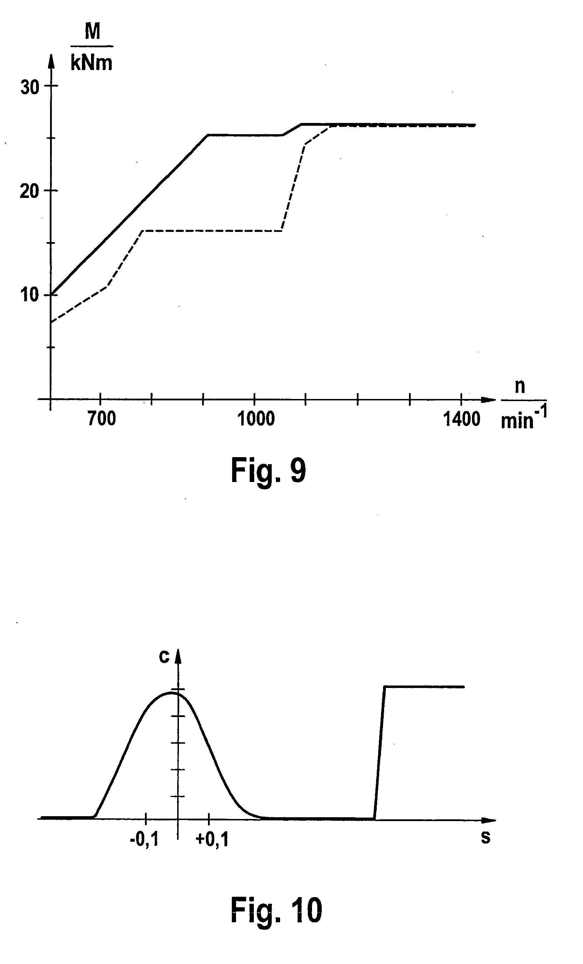

Die Erfindung erreicht damit, dass dank der durch die Verstärkungsfunktion verbesserten Blindleistungsaufteilung das maximal zulässige Drehmoment im Synchronbereich deutlich angehoben werden kann. Das ist in Fig. 9 veranschaulicht. Die gestrichelten Linien zeigen das maximale Moment bei verschiedenen Drehzahlen bei einer Windenergieanlage gemäß dem Stand der Technik und die durchgezogene Linie bei einer erfindungsgemäßen Windenergieanlage.

Außerdem erreicht die Erfindung, dass bei einer Veränderung der Netzfrequenz die herkömmlicherweise auftretenden negativen Belastungseffekte durch die Schlupfsteuerung der Verstärkungsfunktion aufgefangen werden, indem auf sich erhöhende Wirkströme in einem Leistungspfad (Rotor oder Stator) entsprechend mit einer Verringerung der Blindströme reagiert wird, und der verringerte Teil entsprechend auf den anderen Leistungspfad umgelagert wird. Damit einher geht eine Erweiterung des Drehmomentspektrums bei extremen Drehzahlen. Schließlich ermöglicht die Erfindung durch Einbeziehen von Korrekturtermen in die Verstärkungsfunktion bzw. von gezielter Setzung von Stützstellen eine Feinjustage, wobei alle Komponenten im Leistungspfad berücksichtigt werden können und Überlastungen damit verhindert werden können. Weiter besteht die Möglichkeit, mehrere Kennlinien zu speichern, und damit unterschiedliche Drehmomentgrenzkurven zu erzeugen.

Weiter kann bei einer Variante die in Fig. 5 dargestellte Verstärkungsfunktion modifiziert sein. Ein Beispiel für eine solche Variante ist in Fig. 10 dargestellt. Im mittleren Bereich ist die Verstärkungsfunktion weitgehend ähnlich zu der in Fig. 5c dargestellten. Im höheren Schlupfbereich s steigt sie jedoch steil an, um dann auf einem hohen Verstärkungswert c zu verharren. Mit diesem Verlauf der Verstärkungsfunktion kann ein besserer Schutz vor Überlastung erzielt werden. Bei hohen Schlupfwerten s kann es zu einem starken Anstieg der Rotorspannung kommen, dem durch eine erhöhte Blindleistungsabgabe des maschinenseitigen Wechselrichters 42 begegnet wird. Damit dieser bei hohen Schlupfwerten nicht überlastet wird, sieht die Variante vor, durch den hohen Verstärkungswert c nicht nur die Blindleistungsabgabe auf den netzseitigen Wechselrichter zu transferieren, sondern auch durch die hohe Blindleistungsabgabe die Rotorspannung abzusenken.

## Patentansprüche

1. Verfahren zum Steuern eines Umrichters (4) einer Windenergieanlage, der an einem Rotor (32) eines doppelt gespeisten Asynchrongenerators (3) zur Einspeisung elektrischer Energie in ein elektrisches Netz (9) angeschlossen ist, wobei der Umrichter (4) einen netzseitigen Wechselrichter (41), einen generatorseitigen Wechselrichter (42) und eine Steuerung (5) umfasst, die Sollwerte für angeforderte Blindleistung an mindestens einen der Wechselrichter (41, 42) ausgibt,
**gekennzeichnet durch**
Bestimmen eines Blindleistungssollsignals (Q3soll) für den Anteil, den einer der Wechselrichter (41) zur angeforderten Blindleistung (Q_{T}) beiträgt,
Bestimmen eines Schlupfsignals (s) aus der Frequenz des Netzes (9) und Drehzahl des Generators (3),
Berechnen eines Verstärkungswerts (c) in Abhängigkeit von dem Schlupfsignal (s) und
Modifizieren des Blindleistungssollsignals (Q3soll) für diesen Wechselrichter (41) mittels des Verstärkungswerts (c).

2. Verfahren nach Anspruch 1,
**gekennzeichnet durch**
gegenläufiges Ändern des Blindleistungssollsignals (Q2soll) für den anderen der Wechselrichter (42).

3. Verfahren nach Anspruch 1 oder 2,
**gekennzeichnet durch**
Berechnen des Verstärkungswerts (c) mittels einer Ersatzfunktion.

4. Verfahren nach Anspruch 3,
**gekennzeichnet durch**
Verwenden einer quadratischen Funktion als Ersatzfunktion.

5. Verfahren nach Anspruch 3,
**gekennzeichnet durch**
Abrufen des Verstärkungswerts (c) aus einer Look-up-Tabelle.

6. Verfahren nach Anspruch 4 oder 5,
**gekennzeichnet durch**
Berücksichtigen zusätzlicher Korrekturterme.

7. Verfahren nach einem der vorangehenden Ansprüche,
**dadurch gekennzeichnet, dass**
der Verstärkungswert (c) anhand von Stützstellen berechnet wird.

8. Verfahren nach Anspruch 7,
**gekennzeichnet durch**
Linearisieren mittels Spline-Funktionen zwischen den Stützstellen.

9. Verfahren nach einem der vorangehenden Ansprüche, **dadurch gekennzeichnet, dass**
der Verstärkungswert (c) so bestimmt ist, dass in einem Drehzahlbereich bis zum unteren Synchronbereich der netzseitige Wechselrichter (41) voll genutzt wird, vom unteren bis zum oberen Ende des Synchronbereichs der maschinenseitige Wechselrichter (42) voll genutzt wird und über dem oberen Synchronbereich der maschinenseitige Wechselrichter teilweise benutzt wird.

10. Verfahren nach Anspruch 9,
**dadurch gekennzeichnet, dass**
weiter bei hohen Werten des Schlupfsignals (s), insbesondere solchen oberhalb des oberen Endes des Schlupfbereichs, der Verstärkungswert (c) ansteigt, vorzugsweise bis zum Maximum.

11. Verfahren nach einem der vorangehenden Ansprüche,
**dadurch gekennzeichnet, dass**
das Modifizieren durch Multiplikation erfolgt.

12. Verfahren nach einem der vorangehenden Ansprüche,
**dadurch gekennzeichnet, dass**
die Blindleistungsberechnung strombasiert auf Grundlage einer Fixspannung durchgeführt wird, die vorzugsweise die untere Toleranzspannung ist.

13. Windenergieanlage mit einem Windrotor (12), einem davon angetriebenen doppelt gespeisten Asynchrongenerator (3) mit einem Umrichter (4), umfassend einen netzseitigen Wechselrichter (41), einen generatorseitigen Wechselrichter (42) und wenigstens eine Umrichtersteuerung (5) zum Einspeisen elektrischer Energie in ein Netz (9), wobei die Steuerung (5) Sollwerte für angeforderte Blindleistung an mindestens einen der Wechselrichter (41, 42) anlegt,
**dadurch gekennzeichnet, dass**
eine Berechnungseinheit (50, 53), die den Anteil eines der Wechselrichter (41) zur angeforderten Blindleistung bestimmt,
ein Verstärkerblock (55) zur Berechnung eines Verstärkungswerts (c) in Abhängigkeit von einem angelegten Schlupfsignal (s) und
ein Modulator (56) vorgesehen ist zum Modifizieren des vom Verstärkerblocks (55) bestimmten Verstärkungswerts (c) auf das von der Berechnungseinheit bestimmte Blindleistungssollsignal für diesen Wechselrichter (41).

14. Windenergieanlage nach Anspruch 13,
**dadurch gekennzeichnet, dass**
der Umrichter (4) mit seiner Steuerung (5) bei Ausführung des Verfahrens nach einem der Ansprüche 2 bis 12 ausgebildet ist.

## Claims

1. Method for controlling a converter (4) of a wind turbine which is connected to a rotor (32) of a doubly fed asynchronous generator (3) in order to feed electrical energy into an electrical network (9), wherein the converter (4) comprises a network-side inverter (41), a generator-side inverter (42) and a controller (5) which outputs setpoints for demanded reactive power to at least one of the inverters (41, 42),
**characterized by**
determination of a reactive power setpoint signal (Q3soll) for the portion that one of the inverters (41) contributes to the demanded reactive power (Q_{T}),
determination of a slip signal (s) from the frequency of the network (9) and the rotational speed of the generator (3),
calculation of a gain value (c) as a function of the slip signal (s), and
modification of the reactive power setpoint signal (Q3soll) for this inverter (41) by means of the gain value (c).

2. Method according to Claim 1,
**characterized by**
opposite changing of the reactive power setpoint signal (Q2soll) for the other of the inverters (42).

3. Method according to Claim 1 or 2,
**characterized by**
calculation of the gain value (c) by means of an equivalent function.

4. Method according to Claim 3,
**characterized by**
use of a quadratic function as the equivalent function.

5. Method according to Claim 3,
**characterized by**
calling up the gain value (c) from a look-up table.

6. Method according to Claim 4 or 5,
**characterized by**
taking additional correction terms into account.

7. Method according to one of the preceding claims,
**characterized in that**
the gain value (c) is calculated based on node points.

8. Method according to Claim 7,
**characterized by**
linearization by means of spline functions between the node points.

9. Method according to one of the preceding claims,
**characterized in that**
the gain value (c) is determined such that the network-side inverter (41) is fully used in a rotational speed range down to the lower synchronous range, the machine-side inverter (42) is fully used from the bottom to the top end of the synchronous range, and the machine-side inverter is partially used above the upper synchronous range.

10. Method according to Claim 9,
**characterized in that**
further, at high values of the slip signal (s), in particular those above the top end of the slip region, the gain value (c) increases, preferably up to the maximum.

11. Method according to one of the preceding claims,
**characterized in that**
the modification is carried out by multiplication.

12. Method according to one of the preceding claims,
**characterized in that**
the reactive power calculation is carried out based on the current on the basis of a fixed voltage which is preferably the lower tolerance voltage.

13. Wind turbine having a wind rotor (12), a doubly fed asynchronous generator (3) driven thereby having a converter (4) comprising a network-side inverter (41), a generator-side inverter (42) and at least one converter controller (5) for feeding electrical energy into a network (9), wherein the controller (5) applies setpoints for demanded reactive power to at least one of the inverters (41, 42),
**characterized in that**
a calculation unit (50, 53) which determines the contribution of one of the inverters (41) to the demanded reactive power,
a gain block (55) for calculating a gain value (c) as a function of an applied slip signal (s), and
a modulator (56) for modifying the gain value (c) determined by the gain block (55) onto the reactive power setpoint signal determined by the calculation unit for this inverter (41), are provided.

14. Wind turbine according to Claim 13,
**characterized in that**
the converter (4) with its controller (5) is designed for carrying out the method according to one of Claims 2 to 12.

## Revendications

1. Procédé de commande d'un convertisseur (4) d'une éolienne qui est connecté à un rotor (32) d'un générateur asynchrone (3) doublement alimenté pour l'introduction d'énergie électrique dans un réseau électrique (9), le convertisseur (4) comprenant un onduleur côté réseau (41), un onduleur côté générateur (42) et un dispositif de commande (5), qui envoie des valeurs de consigne pour la puissance réactive exigée à au moins un des onduleurs (41, 42),
**caractérisé par**
la détermination d'un signal de consigne de puissance réactive (Q2soll) pour la part à laquelle un des onduleurs (41) contribue à la puissance réactive (Qr) exigée,
la détermination d'un signal de glissement (s) à partir de la fréquence du réseau (9) et de la vitesse de rotation du générateur (3),
le calcul d'une valeur d'amplification (c) en fonction du signal de glissement (s) et
la modification du signal de consigne de la puissance réactive (Q3soll) pour cet onduleur (41) à l'aide de la valeur d'amplification (c).

2. Procédé selon la revendication 1
**caractérisé par**
la variation inverse du signal de consigne de puissance réactive (Q2soll) pour l'autre onduleur (42).

3. Procédé selon la revendication 1 ou 2
**caractérisé par**
le calcul de la valeur d'amplification (c) à l'aide d'une fonction de remplacement.

4. Procédé selon la revendication 3
**caractérisé par**
l'utilisation d'une fonction quadratique en tant que fonction de remplacement.

5. Procédé selon la revendication 3
**caractérisé par**
l'appel de la valeur d'amplification (c) à partir d'une table de référence.

6. Procédé selon la revendication 4 ou 5
**caractérisé par**
la prise en compte de termes de correction supplémentaires.

7. Procédé selon l'une des revendications précédentes
**caractérisé en ce que**
la valeur d'amplification (c) est calculée à l'aide de points d'appui.

8. Procédé selon la revendication 7
**caractérisé par**
une linéarisation à l'aide de fonctions spline entre les points d'appui.

9. Procédé selon l'une des revendications précédentes
**caractérisé en ce que**
la valeur d'amplification (c) est déterminée de façon à ce que, dans une plage de vitesses de rotation jusqu'au domaine synchrone inférieur, l'onduleur côté réseau (41) est entièrement utilisé, de l'extrémité inférieure à l'extrémité supérieure du domaine synchrone l'onduleur côté machine (42) est entièrement utilisé et sur le domaine synchrone supérieur l'onduleur côté machine est utilisé partiellement.

10. Procédé selon la revendication 9
**caractérisé en ce que**
dans le cas de valeurs élevées du signal de glissement (s), plus particulièrement celles au-dessus de l'extrémité supérieure du domaine de glissement, la valeur d'amplification (c) augmente de préférence jusqu'au maximum.

11. Procédé selon l'une des revendications précédentes
**caractérisé en ce que**
la modification a lieu par multiplication.

12. Procédé selon l'une des revendications précédentes
**caractérisé en ce que**
le calcul de la puissance réactive est effectué sur la base du débit sur la base d'une tension fixe, qui est de préférence la tension de tolérance inférieure.

13. Eolienne avec un rotor éolien (12), un générateur asynchrone doublement alimenté (3) entraîné par celui-ci, avec un convertisseur (4) comprenant un onduleur côté réseau (41), un convertisseur côté générateur (42) et au moins un dispositif de commande de convertisseur (5) pour l'introduction d'énergie électrique dans un réseau (9), le dispositif de commande (5) envoyant des valeurs de consigne pour la puissance réactive exigée à au moins un des onduleurs (41, 42),
**caractérisée en ce que**
une unité de calcul (50, 53) détermine la contribution d'un des onduleurs (41) à la puissance réactive exigée,
un bloc amplificateur (55) est prévu pour le calcul d'une valeur d'amplification (c) en fonction d'un signal de glissement (s) appliqué et
un modulateur (56) est prévu pour la modification de la valeur d'amplification (c) déterminée par le bloc amplificateur (55) sur le signal de consigne de puissance réactive déterminé par l'unité de calcul pour cet onduleur (41).

14. Eolienne selon la revendication 13
**caractérisée en ce que**
le convertisseur (4) est conçu avec un dispositif de commande (5) pour la réalisation du procédé selon l'une des revendications 2 à 12.
